# EUROPEAN PATENT SPECIFICATION

(11) **EP 1 212 188 B1**
(45) Date of publication and mention of the grant of the patent: **19.05.2004**
(21) Application number: 00943875.5
(22) Date of filing: 23.06.2000
(51) Int. Cl.: B29D 11/00

(54) **UV-ILLUMINATION DEVICE**
UV-BELEUCHTUNGSVORRICHTUNG
DISPOSITIF D'ILLUMINATION UV

(30) Priority: 25.06.1999 EP 99112256
(43) Date of publication of application: 12.06.2002
(73) Proprietor: Novartis AG, 4056 Basel (CH); Novartis Pharma GmbH, 1230 Wien (AT)
(72) Inventor: HEINRICH, Axel, 63743 Aschaffenburg (DE); MÜLLER, Achim, D-63762 Grossostheim (DE); SEIFERLING, Bernhard, D-63773 Goldbach (DE)
(74) Representative: Grubb, Philip William
(86) International application number: PCT/EP2000/005835
(87) International publication number: WO 2001/000393

(56) References cited:
- EP-A- 0 367 513
- EP-A- 0 637 490
- WO-A-87/04390
- DE-A- 3 737 605
- DE-A- 4 014 363
- US-A- 4 595 838
- US-A- 5 508 317
- PATENT ABSTRACTS OF JAPAN vol. 009, no. 087 (M-372), 17 April 1985 (1985-04-17) & JP 59 215838 A (MITSUBISHI DENKI KK), 5 December 1984 (1984-12-05)
- PATENT ABSTRACTS OF JAPAN vol. 011, no. 120 (M-580), 15 April 1987 (1987-04-15) & JP 61 261009 A (KAWASUMI LAB INC), 19 November 1986 (1986-11-19)
- PATENT ABSTRACTS OF JAPAN vol. 014, no. 468 (P-1115), 12 October 1990 (1990-10-12) & JP 02 187707 A (SUMITOMO ELECTRIC IND LTD), 23 July 1990 (1990-07-23)
- PATENT ABSTRACTS OF JAPAN vol. 1998, no. 04, 31 March 1998 (1998-03-31) & JP 09 326346 A (MATSUSHITA ELECTRON CORP), 16 December 1997 (1997-12-16)

## Description

The invention relates to a method and device for crosslinking a biocompatible, polymerisable material in order to produce an ophthalmic moulding, especially an ophthalmic lens, particularly a contact lens.

Contact lenses, which are to be manufactured economically in large unit numbers, are preferably manufactured by the so-called mould or full-mould process. In these processes, the lenses are manufactured into their final shape between two mould halves, so that there is no need to subsequently finish the surfaces of the lenses, nor to finish the edges. Mould processes are described for example in PCT patent application no. WO/87/04390 or in EP-A 0 367.513.

The contact lenses produced in this manner are moulded parts having little mechanical stability and a water content of more than 60 % by weight. After manufacture, the lens is inspected, then packed and subjected to heat sterilisation at 121°C in an autoclave.

In these known mould processes, the geometry of the contact lenses to be manufactured is defined by the mould cavity. The edge of the contact lens is likewise formed by the mould which normally consists of two mould halves. The geometry of the edge is defined by the contour of the two mould halves in the area in which they make contact.

To manufacture a contact lens, first of all a certain amount of a flowable starting material is placed in the female mould half. Afterwards, the mould is closed by placing the male mould half thereon. Normally, a surplus of starting material is used, so that, when the mould is closed, the excess amount is expelled out into an overflow area adjacent to the mould cavity. The subsequent polymerisation or crosslinking of the starting material takes place by radiation with UV light, or by heat action, or by another non-thermal method.

In US-A-5,508,317, a new contact lens material is described, which represents an important improvement in the chemistry of polymerisable starting materials for the manufacture of contact lenses. The patent discloses a water-soluble composition of a prepolymer, which is filled into the mould cavity and then crosslinked photochemically. Since the prepolymer has several crosslinkable groups, the crosslinking is of high quality, so that a finished lens of optical quality can be produced within a few seconds, without the necessity for subsequent extraction or finishing steps. Owing to the improved chemistry of the starting material as illustrated in the patent, contact lenses can be produced at considerably lower cost, so that in this way it is possible to produce disposable lenses that are used only once.

EP-A-0 637 490 describes a process by means of which a further improvement may be obtained in the preparation process of contact lenses with the prepolymer described in US-A-5,508,317. Here, the material is filled into a mould comprising two halves, whereby the two mould halves do not touch, but a thin circular gap is located between them. The gap is linked to the mould cavity, so that surplus lens material can flow away into the gap. Instead of the polypropylene moulds that may be used only once, reusable quartz/glass moulds may be used. Because of the water-soluble basic chemistry, after a lens has been produced, the uncrosslinked prepolymer and other residues can be removed from the moulds rapidly and effectively with water, and the moulds dried in the air. In this way, high precision of the lens shaping may also be achieved. Crosslinking of the prepolymer takes place by radiation especially with UV light, whereby radiation is restricted to the mould cavity by a chromium screen. In this way, only the material in the mould cavity is crosslinked, so that there is high reproducibility of the edges of the lens without closing the two polypropylene mould halves. The uncrosslinked shaded-off prepolymer solution can be easily washed away from the shaped, crosslinked lens with water.

However, during radiation with conventional UV lamps, there are frequently problems concerning homogeneity of radiation, especially when using glass casting moulds. Owing to the uneven illumination of the mould cavity, the moulding may have a varying degree of crosslinking, which has a negative effect on the stability of the moulding. The edges in particular are frequently insufficiently polymerised, so that the borders of the moulding are not clearly defined.

The invention is concerned with the problem of further improving the crosslinking process for ophthalmic mouldings consisting of biocompatible polymerisable materials, especially for contact lenses, in order to ensure constant quality of the mouldings.

The invention solves this problem with the features indicated in claim 1. As far as further essential embodiments of the process according to the invention and of the device according to the invention are concerned, reference is made to the dependent claims.

By coupling the UV light into the mould cavity using optical fibres, homogeneous illumination is assured, together with high intensity of radiation of the mould cavity. By attaching a number of optical fibres to an ultraviolet lamp, an ultraviolet lamp can be used to crosslink a number of casting moulds, whereupon a very high intensity of illumination can be attained in an efficient manner, enabling rapid polymerisation of the filled moulding material to take place.

Further details and advantages of the invention may be seen from the description that follows and the drawing. In the drawing,
- Fig.1: shows a schematic illustration of an embodiment of a UV illuminating device according to the invention;
- Fig.2: shows a schematic illustration of a means of coupling the UV light into an optical fibre;
- Fig. 3: shows a schematic illustration of the exposure of a casting mould by an optical fibre.

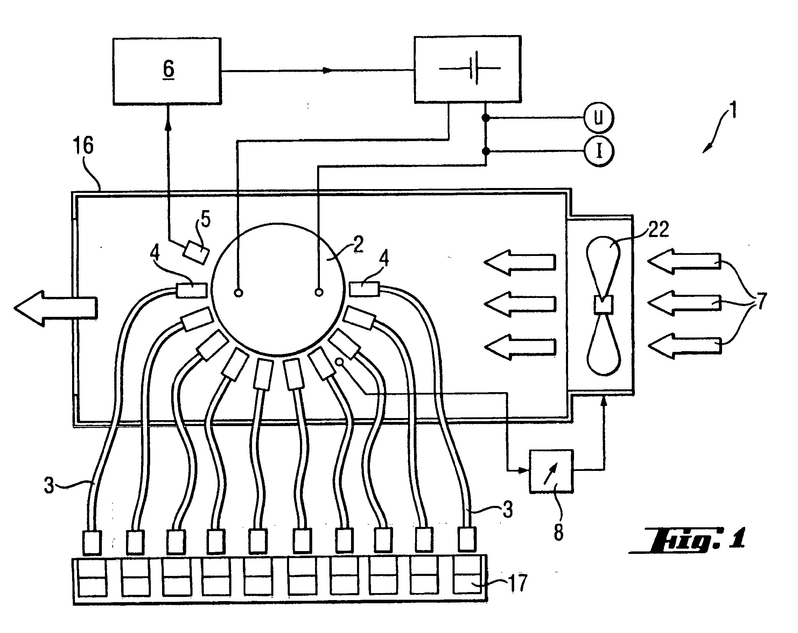

The UV illuminating device 1 illustrated schematically in fig. 1 is preferably mounted in a housing 16 illustrated only schematically here, and consists of a UV lamp 2 and several, advantageously 5 to 50, preferably 10 to 30 optical fibres 3, which surround the UV lamp 2 and are each fixed by a holder 4. The UV lamp 2 in question is suitably a mercury lamp, especially a doped medium pressure mercury lamp, whereby a medium pressure lamp HPA 2020 from Philips or a comparable medium pressure lamp from the company Heraeus can be used for example. The optical fibres 3 conveniently have a length of 0.3 to 2 m and are advantageously formed as liquid optical fibres, since these are particularly well suited to the transmission of UV light. Liquid optical fibres are notable for their high UV transmission, their more homogeneous distribution of intensity of the emerging light rays compared with quartz fibre bundles, and their higher usable cross-sectional area given the same diameter. The UV lamp 2 can be suitably mounted on a quick-change cradle (not illustrated) to enable the lamp 2 to be exchanged easily. The emission spectrum of the UV lamp 2 advantageously has a high UV intensity in the wavelength range 280 - 360 nm, since in this range various types of photoinitiators that can be used in lens material can be activated, for example Irgacure 2050. Due in particular to the radial arrangement of the optical fibres 3 in relation to the longitudinal axis of the UV lamp 2, a high proportion of the radiation emitting from the UV lamp 2 can be coupled into the optical fibres 3 and thus used for crosslinking. The maximum number of optical fibres that can be used is dependent on the diameter of the UV lamp 2 and the distance to the UV lamp. In addition, there is advantageously a sensor 5, which measures the intensity of UV radiation. It is located near to the UV lamp 2. The measurement is passed on to a regulating unit 6 which compares the measured intensity of radiation with a theoretical value and regulates the current intensity I to keep it constant. In addition, a cool stream of air 7 is provided to cool the UV lamp 2. It is passed from the cold components over the hot components by means of an appropriate construction of the housing 16, or by a ventilator 22, respectively. The airstream is controlled by one or more temperature sensors 8 which measure the temperature inside the housing. The cool air stream ensures that the UV lamp 2 bums at an optimum temperature and that the components in the housing of the lamp do not become overheated. In this way, constant operating conditions are assured, which also prolong the life of the UV lamp 2.

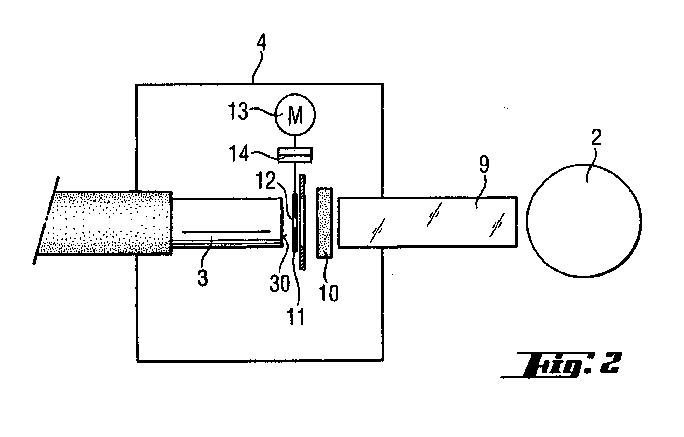

The coupling of UV light into the optical fibres 3 is illustrated in more detail in fig. 2. In order to couple a high intensity of radiation into the optical fibres, a minimum distance to the UV lamp is required, advantageously ca. 1 mm. Since the surface of the UV lamp reaches a temperature or more than 800°C, direct coupling to a liquid optical fibre is impossible owing to its temperature sensitivity. Therefore, the light emitting from the UV lamp is firstly coupled into a quartz rod 9, the diameter of which is co-ordinated with that of the optical fibre 3. The length of the quartz rod 9 depends on the effectiveness of cooling produced by the stream of air. In a first approximation, the length of the quartz rod 9 has no affect on the light intensity that can be coupled into the optical fibres 3. Depending on the design of the lamp, the length of the quartz rod 9 is advantageously between 50 and 120 mm. Between the end of the quartz rod 9 facing away from the UV lamp 2 and the admission area 30 to the optical fibres, there is advantageously a cut-on filter 10 which shades out the short-waved UV radiation < 280 nm, since this causes a more rapid ageing of the optical fibres 3. The cut-on filter additionally prevents polymer degradation of the lens material. The cut-on filter 10 is suitably a WG 305 or 295 filter from the company Schott. Furthermore, a diaphragm 11 is provided between the cut-on filter 10 and the optical fibre admission area 30. By adjusting the aperture 12 of the diaphragm 11, the intensity of radiation entering the optical fibre 3 can be regulated. To regulate the coupled light intensity, the distance between the optical fibre admission area 30 and the quartz rod 9 can also be modified. If a high UV intensity is desired, the distance should be as short as possible. In particular, there may be provisions for the diaphragm aperture 12 to be controlled via a stepping motor unit 13 which is linked to the diaphragm 11 in particular by a flexible coupling 14, whereby adjustment of the diaphragm aperture 12 can be regulated by the measurement of light intensity using a suitable UV measuring unit 15 at the light exit. There should be provision in particular for the diaphragm 11 of each optical fibre 3 to be adjustable independently. As well as solving this by means of a stepping motor unit, the diaphragms 11 may also be controlled manually if desired. The optical fibres 3 emerge from the housing 16 and are respectively arranged over a casting mould 17.

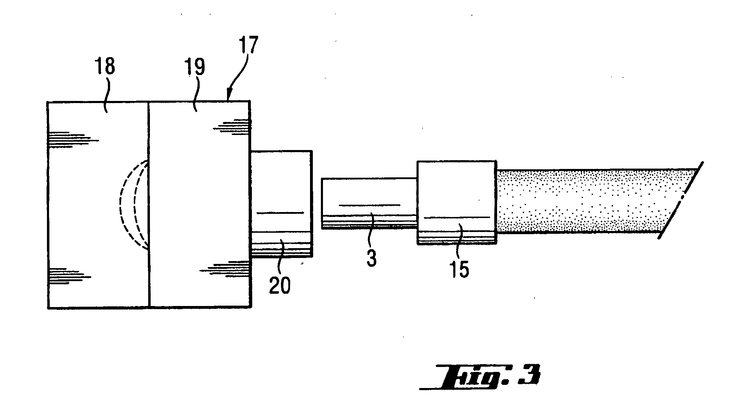

Fig. 3 depicts the exposure of a casting mould 17 consisting of a lower mould half 18 and an upper mould half 19. Arranged between the end of an optical fibre 3 and the upper mould half 19 is preferably a UV condenser 20, which consists of tempered quartz lenses. The condenser 20 serves to bundle the emitting ray of light. The optics thereof are co-ordinated with the geometry of the casting mould. In order to produce a contact lens which is polymerised throughout and has good quality of the edges, the distances between the end of the optical fibre 3 and the condenser 20 and between the condenser 20 and the upper mould half 19 are crucial. In addition, for an optimum path of rays, a diaphragm must be provided in the upper mould half 19. If the distance between the condenser 20 and the casting mould 17 is increased, the intensity of radiation is reduced. This leads to slower polymerisation of the lens material. However, if there is constant exposure time and the intensity of radiation is too high, the contact lenses become brittle and the quality of the edges of the contact lenses deteriorates. When selecting the distance between the condenser 20 and the upper mould 19, an optimum setting must be found, which also depends on the geometry of the upper mould half. This distance is suitably between 30 and 5 mm.

In this way, by coupling the UV light into the mould cavity using optical fibres, the invention enables the mould cavity to be illuminated evenly. By coupling a number of optical fibres to a UV lamp, a very high and even intensity of illumination can be attained in an efficient manner, so that it is possible to polymerise the introduced moulding material very rapidly.

## Claims

1. UV illuminating device for crosslinking biocompatible, polymerisable material in order to produce an ophthalmic moulding, in particular a contact lens in a casting mould (17) consisting of two mould halves (18-19), **characterized by** one or more UV lamps (2), which are each surrounded by several optical fibres (3) whereby each optical fibre is linked to one of several casting moulds (17).

2. UV illuminating device according to claim 1, whereby the UV lamp (2) is a mercury lamp.

3. UV illuminating device according to claim 2, whereby the UV lamp (2) is a doped mercury lamp.

4. UV illuminating device according to one or more of claims 1 to 3, whereby the optical fibres (3) are liquid optical fibres.

5. UV illuminating device according to one or more of claims 1 to 4, whereby the emission spectrum of the UV lamp (2) has a high UV intensity at 280 - 360 nm.

6. UV illuminating device according to one or more of claims 1 to 5, whereby a sensor (5) measuring the radiation intensity of the UV lamp (2) is provided and connected to a regulating unit (6) to regulate the UV radiation.

7. UV illuminating device according to one or more of claims 1 to 6, whereby a measuring unit is provided to measure the emitting UV radiation intensity.

8. UV illuminating device according to one or more of claims 1 to 7, whereby in order to couple in the UV radiation, a quartz rod (9) is respectively provided between the UV lamp (2) and the light admission area (30) of the optical fibre.

9. UV illuminating device according to claim 8, whereby a cut-on filter (10) is provided between the quartz rod (9) and the optical fibre in order to absorb short-waved UV radiation.

10. UV illuminating device according to one or more of claims 1 to 9, whereby a diaphragm (11) is provided between the optical fibre (3) and the UV lamp (2).

11. UV illuminating device according to claim 10, whereby the aperture of the diaphragm is adjusted by means of a stepping motor unit.

12. UV illumination device according to 10, whereby the aperture of the diaphragm (11) is controlled in accordance with the measurement of UV radiation intensity being emitted.

13. UV illuminating device according to one or more of claims 1 to 12, whereby a UV condenser (20) is mounted between the optical fibre (3) and the upper mould half (19).

14. UV illuminating device according to one or more of claims 1 to 13, whereby the optical fibres(3) are arranged radially around the UV lamp (2) in relation to the longitudinal axis of the UV lamp (2).

## Patentansprüche

1. UV-Beleuchtungsvorrichtung zum Vernetzen eines bioverträglichen, polymerisierbaren Materials, um einen ophthalmischen Formling, insbesondere eine Kontaktlinse, in einer Gießform (17) herzustellen, die aus zwei Formhälften (18-19) besteht, **gekennzeichnet durch** eine oder mehrere UV-Lampen (2), die jeweils von mehreren optischen Fasern (3) umgeben sind, wobei jede optische Faser mit einer von mehreren Gießformen (17) verbunden ist.

2. UV-Beleuchtungsvorrichtung nach Anspruch 1, wobei die UV-Lampe (2) eine Quecksilberlampe ist.

3. UV-Beleuchtungsvorrichtung nach Anspruch 2, wobei die UV-Lampe (2) eine dotierte Quecksilberlampe ist.

4. UV-Beleuchtungsvorrichtung nach einem oder mehreren der Ansprüche 1 bis 3, wobei die optischen Fasern (3) flüssige optische Fasern sind.

5. UV-Beleuchtungsvorrichtung nach einem oder mehreren der Ansprüche 1 bis 4, wobei das Emissionsspektrum der UV-Lampe (2) eine hohe UV-Intensität bei 280 - 360 nm aufweist.

6. UV-Beleuchtungsvorrichtung nach einem oder mehreren der Ansprüche 1 bis 5, wobei ein Sensor (5), der die Strahlungsintensität der UV-Lampe (2) misst, bereitgestellt wird und mit einer Regelungseinheit (6) verbunden ist, um die UV-Strahlung zu regeln.

7. UV-Beleuchtungsvorrichtung nach einem oder mehreren der Ansprüche 1 bis 6, wobei eine Messeinheit bereitgestellt wird, um die austretende UV-Strahlungsintensität zu messen.

8. UV-Beleuchtungsvorrichtung nach einem oder mehreren der Ansprüche 1 bis 7, wobei, um die UV-Strahlung einzukoppeln, ein Quarzstab (9) jeweils zwischen der UV-Lampe (2) und dem Lichteinlassbereich (30) der optischen Faser bereitgestellt wird.

9. UV-Beleuchtungsvorrichtung nach Anspruch 8, wobei ein Cut-on-Filter (10) zwischen dem Quarzstab (9) und der optischen Faser bereitgestellt wird, um kurzwellige UV-Strahlung zu absorbieren.

10. UV-Beleuchtungsvorrichtung nach einem oder mehreren der Ansprüche 1 bis 9, wobei eine Blende (11) zwischen der optischen Faser (3) und der UV-Lampe (2) bereitgestellt wird.

11. UV-Beleuchtungsvorrichtung nach Anspruch 10, wobei die Öffnung der Blende durch eine Schrittmotoreinheit eingestellt wird.

12. UV-Beleuchtungsvorrichtung nach Anspruch 10, wobei die Öffnung der Blende (11) gemäß der Messung der emittierten UV-Strahlungsintensität geregelt wird.

13. UV-Beleuchtungsvorrichtung nach einem oder mehreren der Ansprüche 1 bis 12, wobei ein UV-Kondensor (20) zwischen der optischen Faser (3) und der oberen Formhälfte (19) montiert ist.

14. UV-Beleuchtungsvorrichtung nach einem oder mehreren der Ansprüche 1 bis 13, wobei die optischen Fasern (3) radial um die UV-Lampe (2) in bezug auf die Längsachse der UV-Lampe (2) angeordnet sind.

## Revendications

1. Dispositif d'illumination UV pour la réticulation de matériaux polymérisables, biocompatibles afin de produire un moule ophtalmique, plus particulièrement une lentille de contact, dans un moule à couler (17) formé de deux moitiés de moules (18-19) et doté d'une ou plusieurs lampes UV (2), entourées chacune de plusieurs fibres optiques (3), **caractérisé en ce que** chaque fibre optique est reliée à un ou plusieurs moules à couler (17).

2. Dispositif d'illumination UV selon la revendication 1, **caractérisé en ce que** la lampe UV (2) est une lampe au mercure.

3. Dispositif d'illumination UV selon la revendication 2, **caractérisé en ce que** la lampe UV (2) est une lampe au mercure dopée.

4. Dispositif d'illumination UV selon une ou plusieurs des revendications 1 à 3, **caractérisé en ce que** les fibres optiques (3) sont des fibres optiques liquides.

5. Dispositif d'illumination UV selon une ou plusieurs des revendications 1 à 4, **caractérisé en ce que** le spectre d'émission de la lampe UV (2) présente une intensité UV importante entre 280 - 360 nm.

6. Dispositif d'illumination UV selon une ou plusieurs des revendications 1 à 5, **caractérisé en ce qu'**un capteur (5) mesurant l'intensité de rayonnement de la lampe UV (2) est prévu et est connecté à une unité régulatrice (6) régulant le rayonnement UV.

7. Dispositif d'illumination UV selon une ou plusieurs des revendications 1 à 6, **caractérisé en ce qu'**une unité de mesure est prévue et est destinée à mesurer l'intensité de radiation UV émise.

8. Dispositif d'illumination UV selon une ou plusieurs des revendications 1 à 7, **caractérisé en ce qu'**afin de coupler dans le rayonnement UV, un bâtonnet de quartz (9) est prévu entre la lampe UV (2) et la zone d'admission de la lumière (30) de la fibre optique.

9. Dispositif d'illumination UV selon la revendication 8, **caractérisé en ce qu'**un filtre (10) est prévu entre le bâtonnet de quartz (9) et la fibre optique afin d'absorber le rayonnement UV à ondes courtes.

10. Dispositif d'illumination UV selon une ou plusieurs des revendications 1 à 9, **caractérisé en ce qu'**un diaphragme (11) est prévu entre la fibre optique (3) et la lampe UV (2).

11. Dispositif d'illumination UV selon la revendication 10, **caractérisé en ce que** l'ouverture du diaphragme est ajustée au moyen d'une unité de moteur pas à pas.

12. Dispositif d'illumination UV selon la revendication 10, **caractérisé en ce que** l'ouverture du diaphragme (11) est contrôlée conformément à la mesure de l'intensité du rayonnement UV émis.

13. Dispositif d'illumination UV selon l'une quelconque des revendications 1 à 12, **caractérisé en ce qu'**un condensateur UV (20) est installé entre la fibre optique (3) et la moitié supérieure du moule (19).

14. Dispositif d'illumination UV selon l'une quelconque des revendications 1 à 13, **caractérisé en ce que** les fibres optiques (3) sont disposées radialement autour de la lampe UV (2) par rapport à l'axe longitudinal de la lampe UV (2).
